# EUROPEAN PATENT SPECIFICATION

(11) **EP 2 012 308 B1**
(45) Date of publication and mention of the grant of the patent: **19.05.2010**
(21) Application number: 08158948.3
(22) Date of filing: 25.06.2008
(51) Int. Cl.: G11B 5/596

(54) **Magnetic recording medium, hard disk drive employing the same, and method of measuring write read offset of the hard disk drive**
Magnetisches Aufzeichnungsmedium, Festplattenlaufwerk damit, Verfahren zum Messen der Lese-Schreibausgabe des Festplattenlaufwerks
Support d'enregistrement magnétique, lecteur de disque dur l'utilisant, et procédé de mesure du décalage d'écriture/lecture du lecteur de disque dur

(30) Priority: 04.07.2007 KR 20070067130
(43) Date of publication of application: 07.01.2009
(73) Proprietor: Samsung Electronics Co., Ltd., Suwon-si Gyeonggi-do 443-742 (KR)
(72) Inventor: Lee, Hoo-san c/o Samsung Advanced Insitute of Technology, Gyeonggi-do (KR); Oh, Hoon-sang Samsung Advanced Institute of Technology, Gyeonggi-do (KR); Choa, Sung-hoon Samsung Advanced Institute of Technology, Gyeonggi-do (KR)
(74) Representative: Anderson, James Edward George

(56) References cited:
- EP-A- 0 339 851
- EP-A- 1 596 398
- US-A1- 2006 126 213

## Description

### BACKGROUND OF THE INVENTION

### 1. Field of the Invention

Methods and apparatuses consistent with the present invention relate to a magnetic recording medium, a hard disk drive (HDD) employing the same, and a method of measuring a write read (WR) offset of the HDD, and more particularly, to a magnetic recording medium, such as a discrete track medium or a patterned medium having a data area which is patterned, wherein the magnetic recording medium can be easily used to measure a WR offset, an HDD employing the magnetic recording medium, and a method of measuring an WR offset of the HDD.

### 2. Description of the Related Art

Recently, with the rapid increase in the amount of data being handled, the demands for higher density data storage devices for recording and reproducing data have increased. In particular, since HDDs employing a magnetic recording medium have high storage capacity and high access speeds, they have attracted great attention as data storage devices for various digital devices as well as computer systems. Meanwhile, in the case of magnetic recording medium having a continuous magnetic recording layer (referred to as continuous medium hereinafter), when the size of bits, which are the smallest units for recording data, or the pitch of data tracks are reduced below a certain limit, noise increases and recording stability deteriorates due to magnetic interaction between adjacent data tracks. Accordingly, there are limitations in increasing recording density by increasing linear recording density, which is density in the rotating direction of the magnetic recording medium, and track density, which is density in the radial direction of the magnetic recording medium.

Hence, discrete track medium or patterned medium having data areas where magnetic recording is carried out and which are pre-patterned in a manufacturing process have been studied. Discrete track medium are configured such that spaces between data tracks are empty or filled with a non-magnetic material. Pattern medium are configured such that bit dots, which are minimum recording units, are patterned into islands and spaces around the bit dots are empty or filled with a non-magnetic material. However, it is difficult to use discrete track medium and patterned medium with a method of measuring a write read (WR) offset applied to continuous medium including a continuous magnetic recording layer.

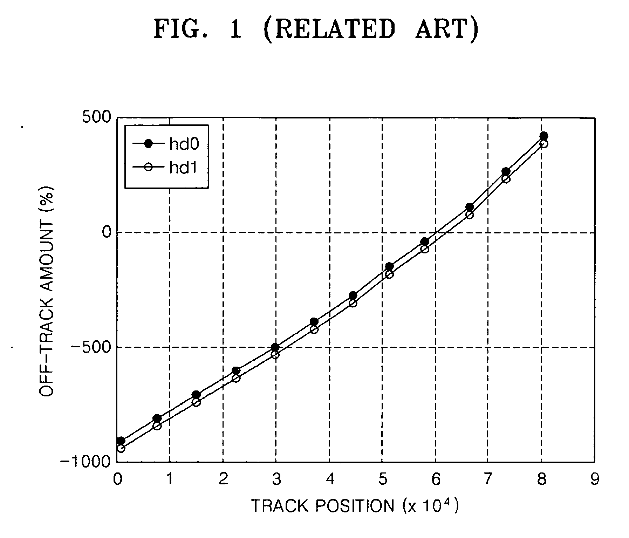

FIG. 1 is a graph illustrating a relationship between the off-track amount and the track position of a magnetic head of a continuous medium. Referring to FIG. 1, a WR offset varies according to the track position of the magnetic head and magnetic recording surfaces hd0 and hd1. The WR offset may also vary according to a distance between a write head and a read head of the magnetic head or the manufacturing tolerance of the write head and the read head. Referring to FIG. 1, an offset of approximately 5 to 10 tracks occurs at outer portions of the continuous medium. The WR offset may become worse when a discrete track medium or a patterned medium having a narrower track pitch than that of the continuous medium is used. Accordingly, a method of measuring a WR offset for a discrete track medium or a patterned medium is required.

A method of measuring a WR offset for a continuous medium comprises writing specific data and searching for the optimal position of a magnetic head where the written data is to be read. The method of measuring the WR offset for the continuous medium comprises writing data to be measured using a write head in a specific track position, changing the off-track amount of the head at the specific track position, and calculating an off-track value when a signal input from a read head is a maximum. Since the WR offset continuously varies according to the track position of the head, off-track values at various positions are obtained and then a value at each track position of the head is predicted as shown in FIG. 1. However, in the case of a discrete track medium or a patterned medium, since data areas where magnetic recording is carried out, such as data tracks or bit dots, are pre-determined in a manufacturing process, data may be written out of the data tracks or the bit dots. In this case, since the data fails to be written out of the data tracks or the bit data, an error is caused when the method of measuring the WR offset for the continuous medium is used for the discrete track medium or the patterned medium. Accordingly, it is problematic to use the method of measuring the WR offset applied to the continuous medium for the discrete track medium or the patterned medium.

EP 1596398 A2 discloses a magnetic recording medium in which the magnetic recording layer is patterned into a plurality of data tracks. The magnetic recording layer also comprises patterned preamble and burst regions.

### SUMMARY OF THE INVENTION

According to an aspect of the present invention, there is provided a magnetic recording medium comprising:
a disk substrate; and
a magnetic recording layer formed on at least one surface of the disk substrate,
wherein the magnetic recording layer comprises at least one pattern area patterned into a plurality of data tracks, wherein the at least one pattern area is formed of a patterned magnetic substance,
and wherein the magnetic recording medium is characterized in that the magnetic recording layer further comprises at least one continuous area formed of a continuous magnetic substance for use in determining a write read, hereinafter referred to as WR, offset.

According to another aspect of the present invention, there is provided an HDD comprising: the magnetic recording medium described above; a magnetic head including: a write head writing data on the magnetic recording medium and a read head reading data recorded on the magnetic recording medium; and a control unit controlling the position of the magnetic head on the magnetic recording medium, wherein the control unit detects a WR offset of the magnetic head using the continuous area of the magnetic recording medium.

The magnetic recording medium may be a discrete track medium configured such that the plurality of data tracks are magnetically isolated from each other in a crosstrack direction and are formed of the continuous magnetic substance in a downtrack direction.

The magnetic recording medium may be a patterned medium configured such that the plurality of data tracks are formed of a non-continuous magnetic substance in a crosstrack direction and a downtrack direction.

According to another aspect of the present invention, there is provided a method of measuring a WR offset, in an HDD, of a magnetic head of a magnetic recording medium comprising at least one pattern area patterned into a plurality of data tracks, wherein the at least one pattern area is formed of a patterned magnetic substance, and at least one continuous area formed of a continuous magnetic substance, the method comprising: writing at least one part of a WR offset measurement pattern in the continuous area of the magnetic recording medium; and measuring a WR offset from the WR offset measurement pattern.

The present invention thus provides a magnetic recording medium, which can use a method of measuring a WR offset used for a related art continuous medium without requiring large modifications to be made to the method, an HDD employing the magnetic recording medium, and a method of measuring the WR offset of the HDD.

### BRIEF DESCRIPTION OF THE DRAWINGS

The above and other aspects of the present invention will become more apparent by describing in detail exemplary embodiments thereof with reference to the attached drawings in which:
FIG. 1 is a graph illustrating a relationship between the off-track amount due to a WR offset and the track position of a head;
FIG. 2 is a top view of a magnetic recording medium according to an exemplary embodiment of the present invention;
FIG. 3 is an enlarged perspective view of a part R1 of the magnetic recording medium of FIG. 2;
FIG. 4 is a top view of a magnetic recording medium according to another exemplary embodiment of the present invention;
FIG. 5 is an enlarged perspective view of a part R2 of the magnetic recording medium of FIG. 4;
FIG. 6 is a top view of a magnetic recording medium according to another exemplary embodiment of the present invention;
FIG. 7 is an enlarged perspective view of a part R3 of the magnetic recording medium of FIG. 6;
FIG. 8 is a top view of a magnetic recording medium according to another exemplary embodiment of the present invention;
FIG. 9 is an enlarged perspective view of a part R4 of the magnetic recording medium of FIG. 8;
FIG. 10 is an air bearing surface view of a magnetic head according to an exemplary embodiment of the present invention;
FIGS. 11 and 12 are views for explaining a WR offset of the magnetic head of FIG. 10;
FIG. 13 is a block diagram of an HDD employing a magnetic recording medium according to an exemplary embodiment of the present invention; and
FIG. 14 is a flowchart illustrating a method of measuring a WR offset of a magnetic recording medium according to an exemplary embodiment of the present invention.

### DETAILED DESCRIPTION OF THE INVENTION

The present invention will now be described more fully with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. In the drawings, the thicknesses of components may be exaggerated for clarity. Like reference numerals refer to like elements throughout.

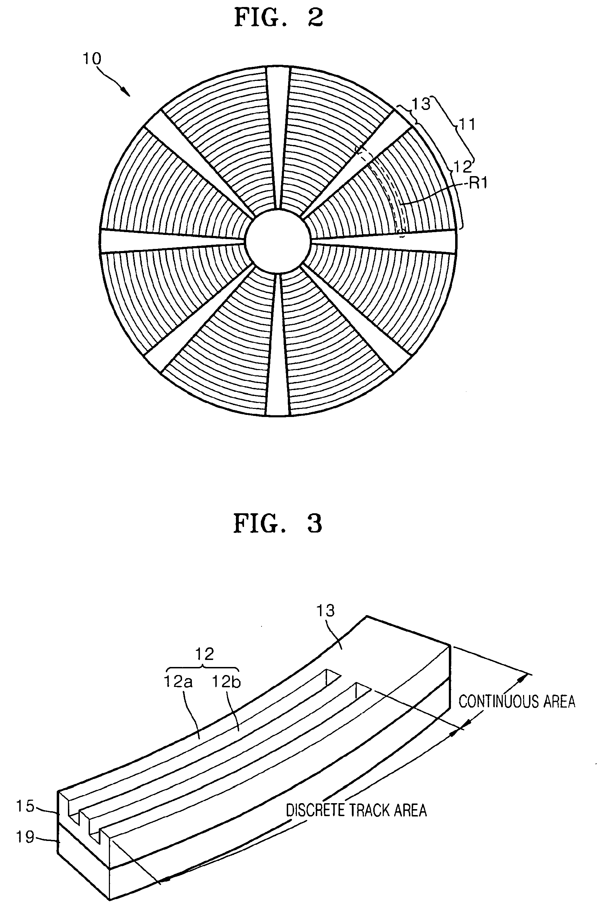

A magnetic recording medium according to an exemplary embodiment of the present invention will now be explained with reference to FIGS. 2 and 3. FIG. 2 is a top view of a magnetic recording medium 10 according to an exemplary embodiment of the present invention. FIG. 3 is an enlarged perspective view of a part R1 of the magnetic recording medium 10 of FIG. 2.

Referring to FIG. 2, a magnetic recording surface of the magnetic recording medium 10 has a disk shape and is divided equiangularly into a plurality of sectors 11 having a fan-shape. Each of the sectors 11 includes a discrete track area 12 and a continuous area 13.

Referring to FIG. 3, the magnetic recording medium 10 includes a disk substrate 19 and a magnetic recording layer 15 formed on at least one surface of the disk substrate 19.

The discrete track area 12 of the magnetic recording layer 15 is patterned into data tracks 12a formed of a magnetic substance and protruding from the disk substrate 19, and separation areas 12b magnetically isolating the data tracks 12a from one another. The data tracks 12a which are data areas where magnetic recording is performed are pre-determined in a manufacturing process. The data tracks 12a are magnetically isolated from one another in a crosstrack direction, and are formed of a continuous magnetic substance in a downtrack direction. Each of the data tracks 12a may have a width of several to tens of nanometers (nm). The separation areas 12b magnetically isolating the data tracks 12a may be empty or filled with a non-magnetic material. Accordingly, the discrete track area 12 minimizes magnetic interaction between adjacent data tracks 12a, thereby increasing recording density.

The continuous area 13 of the magnetic recording layer 15 has a surface formed of a continuous magnetic substance. The continuous areas 13 each having a wedge shape are equally distanced from the disk center as shown in FIG. 2. The continuous area 13 is used to measure a WR offset. That is, the continuous area 13 becomes a WR offset measurement part. In order to measure a WR offset, an arbitrary WR offset measurement pattern may be written in the continuous area 13. While the WR offset measurement pattern is written only to measure a WR offset in FIGS. 2 and 3, the present exemplary embodiment is not limited thereto. For example, the WR offset measurement pattern may be user data or a pattern written for other purposes. Also, the WR offset measurement pattern may be written at one time or at separate times. There are many methods of measuring a WR offset used for a related art continuous medium. Since the continuous area 13 is used to measure a WR offset in FIGS. 2 and 3, various patterns used to measure a WR offset for the related art continuous medium can be used as WR offset measurement patterns.

While one continuous area 13 used to measure a WR offset is formed for each sector 11 in FIGS. 2 and 3, the present exemplary embodiment is not limited thereto. For example, the continuous area 13 may be formed in only one sector or some sectors of the magnetic recording surface.

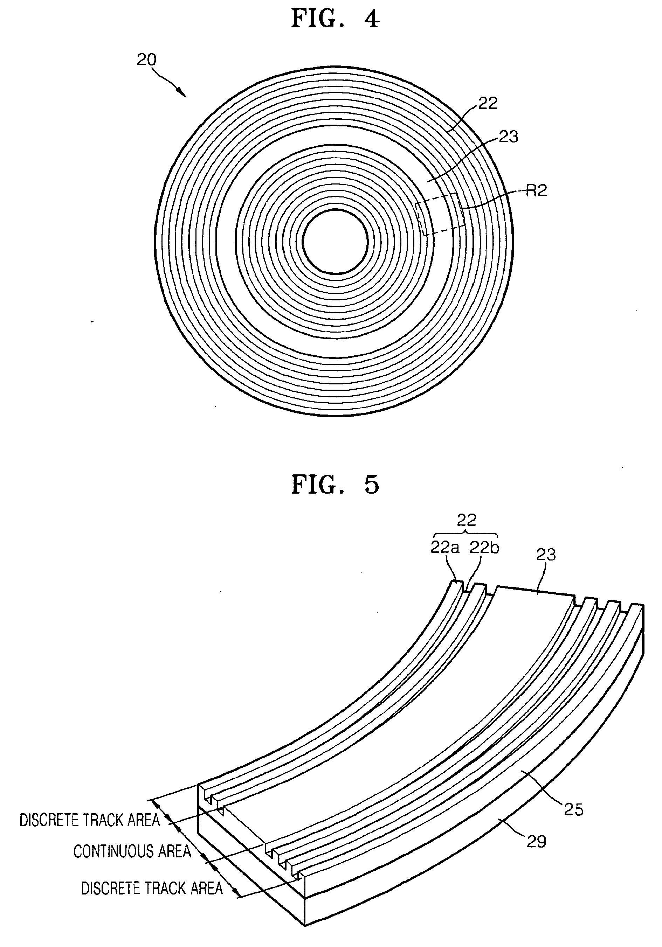

A magnetic recording medium according to another exemplary embodiment of the present invention will now be explained with reference to FIGS. 4 and 5. FIG. 4 is a top view of a magnetic recording medium 20 according to another exemplary embodiment of the present invention. FIG. 5 is an enlarged perspective view of a part R2 of the magnetic recording medium 20 of FIG. 4.

Referring to FIG. 4, a magnetic recording surface of the magnetic recording medium 20 has a disk shape, and includes discrete track areas 22 on which circular data tracks 22a are patterned about a disk center and a continuous area 23 having an annular band shape concentric with the data tracks 22a.

Referring to FIG. 5, the magnetic recording medium 20 includes a disk substrate 29 and a magnetic recording medium 25 formed on at least one surface of the disk substrate 29. The discrete track areas 22 of the magnetic recording layer 25 are patterned into the data tracks 22a formed of a magnetic substance and protruding from the disk substrate 29, and separation areas 22b magnetically isolating the data tracks 22a. The data tracks 22a which are data areas where magnetic recording is performed are pre-determined in a manufacturing process. Since the data tracks 22a are substantially the same as the data tracks 12a of FIGS. 2 and 3 except that the data tracks 22a are formed of continuous circular shape, no redundant explanation thereof will be given.

The continuous area 23 of the magnetic recording layer 25 has a surface formed of a continuous magnetic substance, and has an annular band shape as shown in FIG. 4. While only the continuous area 23 is formed over the entire magnetic recording surface in FIG. 4, the present exemplary embodiment is not limited thereto. A plurality of concentric continuous areas concentric with the data tracks 22a may be formed about the disk center.

The continuous area 23 becomes a WR offset measurement part. For example, a WR offset measurement pattern may be written in the continuous area 23, and a WR offset may be measured using the written WR offset measurement pattern. The WR offset measurement pattern may be a WR offset measurement pattern used in a related art continuous medium. Considering a margin during the measuring of the WR offset, the continuous area 23 may have a width corresponding to at least 2 track pitches. Since the magnetic recording medium 20 of FIGS. 4 and 5 includes the continuous area 23, a method of measuring a WR offset used for the related art continuous medium which includes writing data and detecting the written data can be used without being changed too much.

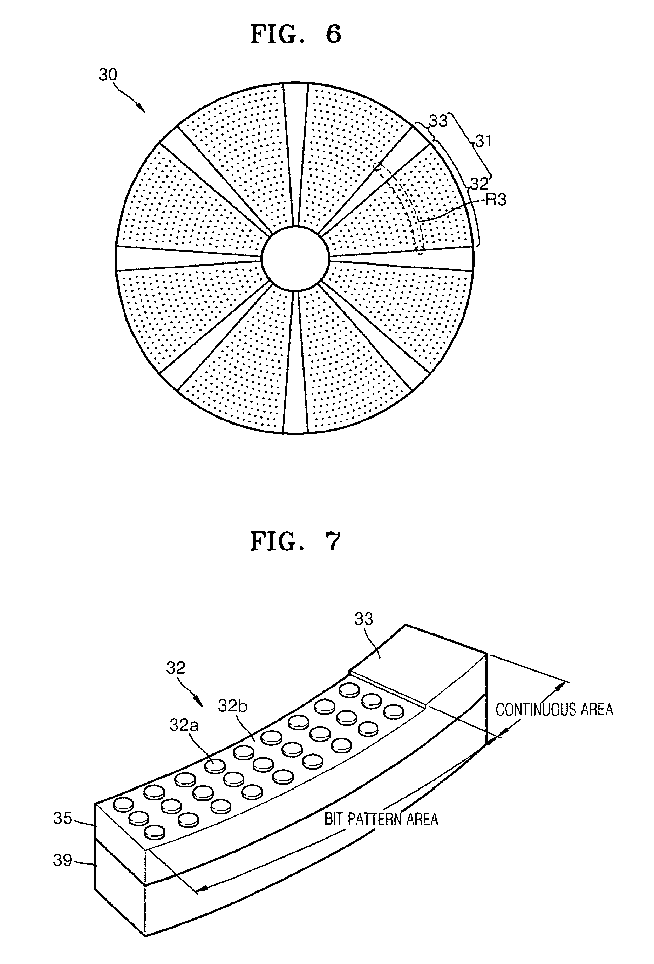

A magnetic recording medium according to another exemplary embodiment of the present invention will now be explained with reference to FIGS. 6 and 7. FIG. 6 is a top view of a magnetic recording medium 30 according to another exemplary embodiment of the present invention. FIG. 7 is an enlarged perspective view of a part R3 of the magnetic recording medium 30 of FIG. 6.

Referring to FIGS. 6 and 7, a magnetic recording surface of the magnetic recording medium 30 is divided equiangularly into a plurality of sectors 31 having a fan shape. Each of the sectors 31 includes a bit pattern area 32 and a continuous area 33. Referring to FIG. 7, the magnetic recording medium 30 includes a disk substrate 39 and a magnetic recording layer 35 formed on at least one surface of the disk substrate 39.

The bit pattern area 32 of the magnetic recording layer 35 is formed of a non-continuous magnetic substance in a crosstrack direction and a downtrack direction. The non-continuous magnetic substance may be bit dots 32a formed by patterning user data in minimum magnetic recording units. One bit is assigned to each of bit dots 32a. Separation areas 32b surrounding the bit dots 32a are empty or filled with a non-magnetic substance to magnetically isolate the bit dots 32a from one another. The bit pattern area 32 minimizes magnetic interaction between adjacent bit dots 32a and reduces the bit size, thereby increasing recording density. The bit dots 32a line up to form data tracks.

The continuous area 33 of the magnetic recording layer 35 has a surface formed of a continuous magnetic substance, and is used to measure a WR offset. For example, various patterns used to measure a WR offset for a related art continuous medium may be written as WR offset measurement patterns in the continuous area 33 of FIGS. 6 and 7. Since the magnetic recording medium 30 is substantially the same as the magnetic recording medium 10 of FIGS. 2 and 3 except for bit pattern areas 32, no redundant explanation thereof will be given.

While one continuous area 33 is formed for each sector 31 in FIG. 6, the present exemplary embodiment is not limited thereto. The continuous area 33 may be formed in only one sector or some sectors of the entire magnetic recording surface.

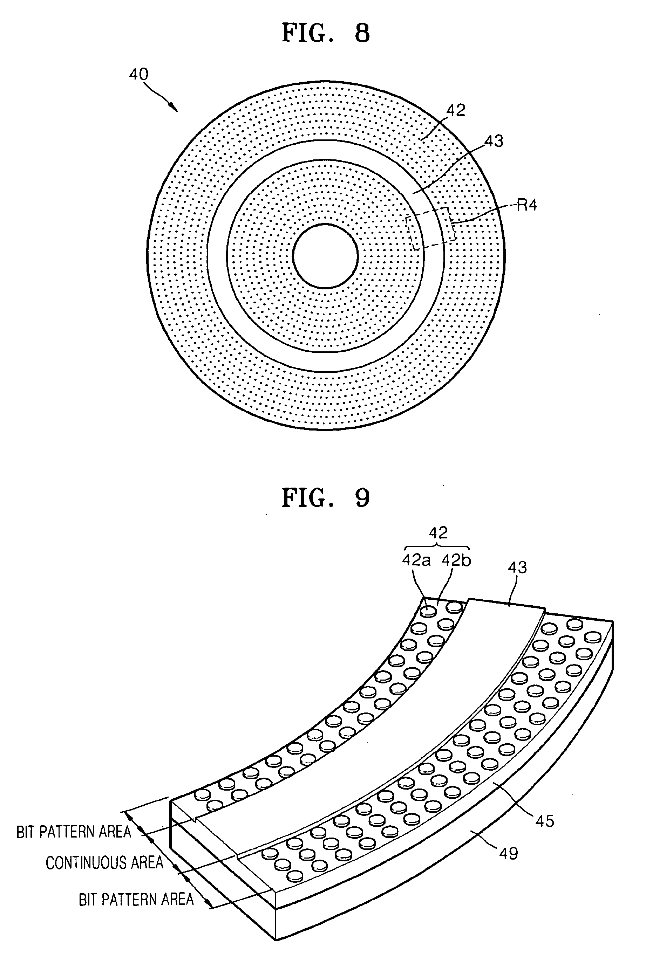

A magnetic recording medium according to another exemplary embodiment will now be explained with reference to FIGS. 8 and 9. FIG. 8 is a top view of a magnetic recording medium 40 according to another exemplary embodiment of the present invention. FIG. 9 is an enlarged perspective view of a part R4 of the magnetic recording medium 40 of FIG. 8. Since the magnetic recording medium 40 of FIGS. 8 and 9 is substantially the same as the magnetic recording medium 20 of FIGS. 4 and 5 except for bit pattern areas 42, no redundant explanation thereof will be given.

Referring to FIG. 8, a magnetic recording surface of the magnetic recording medium 40 has a disk shape, and includes the bit pattern areas 42 on which circular data tracks are patterned about a disk center and a continuous area 43 having an annular band shape concentric with the data tracks. Referring to FIG. 9, the magnetic recording medium 40 includes a disk substrate 49, and a magnetic recording layer 45 formed on at least one surface of the disk substrate 49. The bit pattern areas 42 of the magnetic recording layer 45 include bit dots 42a formed of a non-continuous magnetic substance in a crosstrack direction and a downtrack direction, and separation areas 42b surrounding the bit dots 42a. The bit dots 42a are arranged in circular lines to form the data tracks. Since the bit dots 42a are substantially the same as the data tracks 32a of FIGS. 6 and 7 except that the bit dots 42a are arranged in continuous circular lines, no redundant explanation thereof will be given.

The continuous area 43 of the magnetic recording layer 45 has a surface formed of a continuous magnetic substance, and has an annular band shape as shown in FIG. 8. A WR offset measurement pattern may be written in the continuous area 43 to measure a WR offset. Considering a margin during the measuring of the WR offset, the continuous area 43 may have a width corresponding to at least 2 track pitches. While one continuous area 43 is formed over the entire magnetic recording surface in FIG. 8, the present exemplary embodiment is not limited thereto. A plurality of continuous areas concentric with the data tracks may be formed about the disk center.

An HDD employing a magnetic recording medium and a method of measuring the WR offset of the HDD according to an exemplary embodiment of the present invention will be explained.

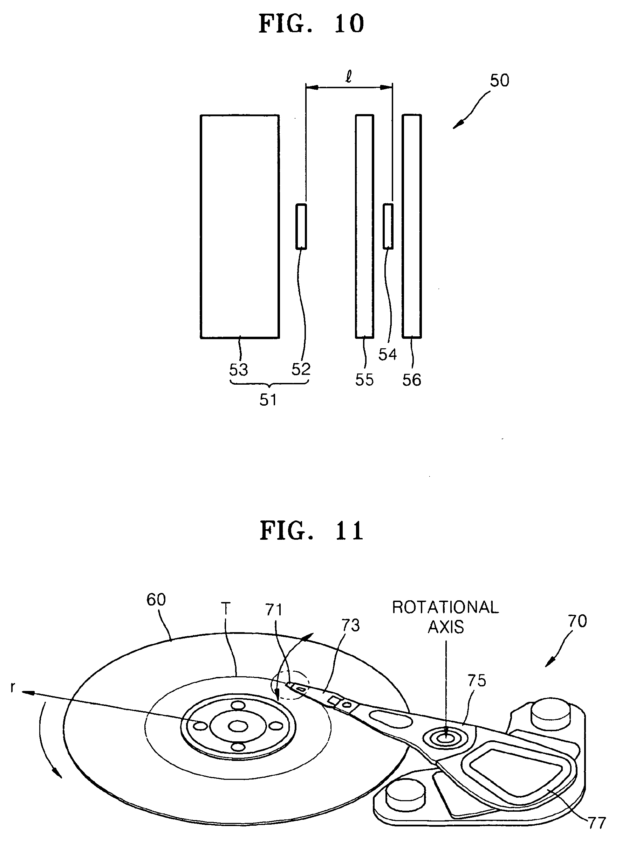

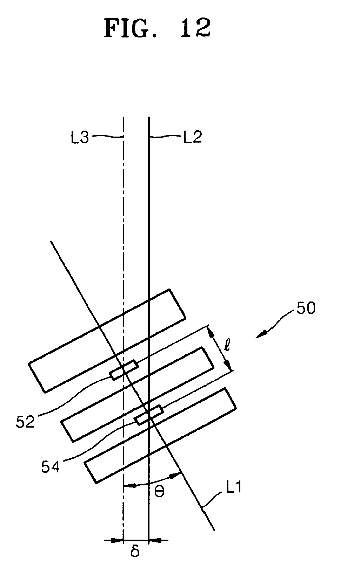

A WR offset of a magnetic head in an HDD employing a magnetic recording medium according to an exemplary embodiment of the present invention will now be explained with reference to FIGS. 10 through 12. FIG. 10 illustrates an air bearing surface of a magnetic head 50 according to an exemplary embodiment of the present invention. FIG. 11 is a perspective view illustrating an actuator on which the magnetic head 50 of FIG. 10 is installed and a magnetic recording medium. FIG. 12 illustrates a WR offset of the magnetic head 50 of FIG. 10.

Referring to FIG. 10, a magnetic head 50 includes a write head 51 having a write pole 52 and a return pole 53, a read head 54, and shield layers 55 and 56 shielding a stray field introduced into the read head 54. The write pole 52 and the read head 54 are spaced a predetermined distance ℓ from each other. Since the magnetic head 50 is substantially the same in structure as a magnetic head employed in a related art HDD, a detailed explanation thereof will not be given.

Referring to FIG. 11, the magnetic head 50 of FIG. 10 passing over a surface of a magnetic recording medium 60 is moved by an actuator 70 to write and read data. The actuator 70 includes an actuator arm 75 and a suspension 73 extending from the actuator arm 75. A slider 71 on which the magnetic head 50 is installed is attached to an end of the suspension 73.

The magnetic head 50 is moved to another track T on the magnetic recording medium 60 while being rotated around the rotational axis of the actuator 70. The motion of the magnetic head 50 due to the rotation of the actuator 70 may be represented as a combination of parallel translation and rotation. Referring to FIG. 12, the rotation of the magnetic head 50 is made such that the center line L1 of the magnetic head 50 and the trajectory L2 of the read head 54 or the trajectory L3 of the write head 51 deviate from each other.

When the read head 54 correctly follows the track, the trajectory L2 of the read head 54 coincides with the track. However, as shown in FIG. 12, the trajectory L2 of the read head 54 and the trajectory L3 of the write head 51 may be different from each other, and in this case, the trajectory L3 of the write head 51 does not coincide with the track. Such a shifted amount between the trajectory L2 of the read head 54 and the trajectory L3 of the write head 51 is termed as a WR offset δ, and an angle between the center line L1 of the magnetic head 50 and the rotational direction of the magnetic recording medium 60 is termed as a skew angle θ.

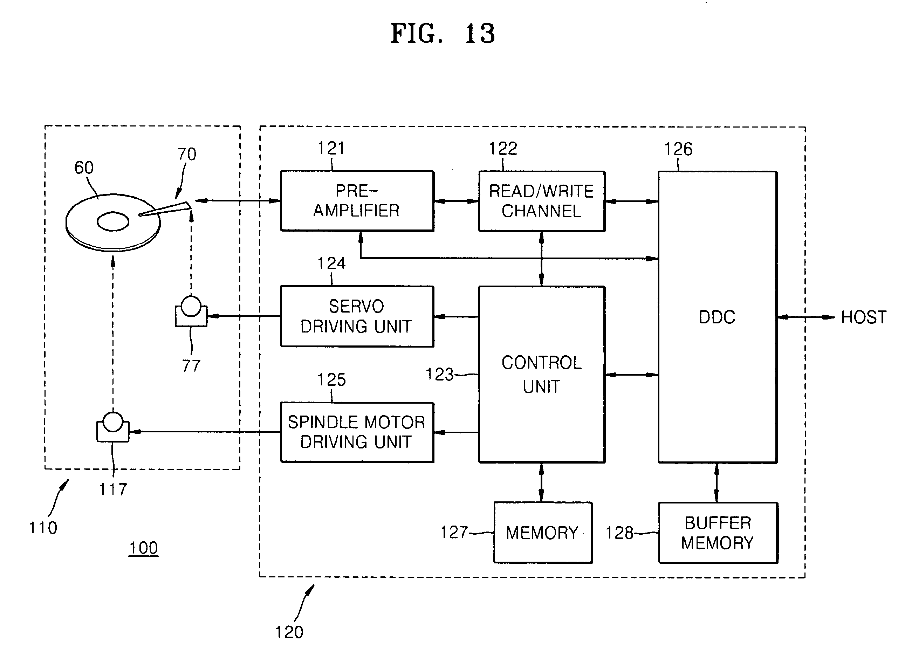

An HDD employing a magnetic recording medium according to an exemplary embodiment of the present invention will now be explained with reference to FIG. 13. FIG. 13 is a block diagram of an HDD 100 employing a magnetic recording medium 60 according to an exemplary embodiment of the present invention.

Referring to FIG. 13, the HDD 100 includes a head disk assembly 110 having mechanical components, and a circuit unit 120.

The head disk assembly 110 includes the magnetic recording medium 60 rotated by a spindle motor 117, and an actuator 70. The magnetic recording medium 60 may be any one of the magnetic recording medium 10 through 40 of FIGS. 2 through 9. A detailed explanation of the magnetic recording medium 60 will not be given to avoid a redundant explanation. The actuator 70 is configured such that an actuator arm 75 having an end to which a slide 71 with a magnetic head is attached is driven by a voice coil motor (VCM) 77. The magnetic head mounted on the actuator 70 may be the magnetic head 50 described with reference to FIG. 10, but the present exemplary embodiment is not limited thereto. The circuit unit 120 includes a pre-amplifier 121, a read/write channel 122, a control unit 123, a servo driving unit 124, a spindle motor driving unit 125, a disk data controller (DDC) 126, a memory 127, and a buffer memory 128.

In a write mode, the pre-amplifier 121 permits encoded write data applied from the read/write channel 122 to be written on the magnetic recording medium 60 using the magnetic head. In a read mode, the pre-amplifier 121 preamplifies analogue read signals picked up by the magnetic head and applies the analogue read signals to the read/write channel 122. The read/write channel 122 detects and decodes data pulses from the read signals applied from the pre-amplifier 121 and applies the decoded data pulses to the DDC 126, or the read/write channel 122 encodes write data provided from the DDC 126 and applies the encoded write data to the pre-amplifier 121. The DDC 126 writes data received from a host computer on the magnetic recording medium 60 using the read/write channel 122 and the pre-amplifier 121, or reads data from the magnetic recording medium 60 and transmits the read data to the host computer. Also, the DDC 126 interfaces communications between the host computer and the control unit 123. The buffer memory 128 temporarily stores data transmitted among the host computer, the control unit 123, and the read/write channel 122. The control unit 123 controls the DDC 126 in response to a read or write command received from the host computer, and controls track finding and track following. The memory 127 stores programs of the control unit 123 and various values. The servo driving unit 124 drives the VCM 77 by generating a driving current for driving the actuator 70 using a signal for controlling the position of the magnetic head generated by the control unit 123. The actuator 70 moves the magnetic head to a recording surface of the magnetic recording medium 60 in accordance with the direction and level of the driving current applied by the servo driving unit 124. The spindle motor driving unit 125 drives the spindle motor 117 according to a control value for controlling the rotation of the magnetic recording medium 60 generated by the control unit 123 in order to rotate the magnetic recording medium 60.

For example, data regarding a WR offset measurement pattern is applied from the host computer to the DDC 126, and is written on the magnetic recording medium 60 using the read/write channel 122 and the pre-amplifier 121. Information on the position of a continuous area of the magnetic recording medium 60 may be previously recorded in the magnetic recording medium 60. In this case, the WR offset measure pattern is written in the continuous area of the magnetic recording medium by referring to the previously recorded information on the position of the continuous area. The information on the position of the continuous area of the magnetic recording medium 60 may be recorded as a specific pattern together with track information in a process of patterning data tracks when the magnetic recording medium 60 is manufactured. However, the information on the position of the continuous area may be separately recorded after the magnetic recording medium 60 is manufactured or may be stored in the memory 127 within the circuit unit 120, and the present exemplary embodiment is not limited thereto.

The control unit 123 detects a WR offset based on the WR offset measurement pattern using the programs stored in the memory 127, and drives the servo driving unit 124 using the detected WR offset so as to permit the magnetic head to read and write data in a corrected position.

Since the above operations of writing the WR offset measurement pattern, detecting the WR offset using the written WR offset measurement pattern, and correcting the position of the magnetic head using the detected WR offset are not vastly different from methods used for an HDD employing a related art continuous medium, the WR offset of the magnetic head can be corrected without requiring large modifications to be made to a circuit unit of the HDD employing the related art continuous medium.

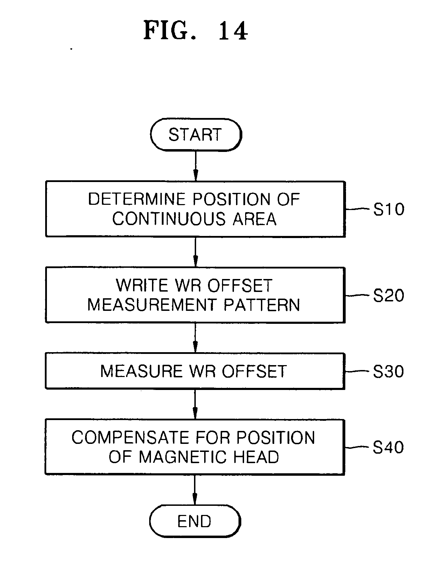

A method of measuring a WR offset in an HDD according to an exemplary embodiment of the present invention will now be explained with reference to FIG. 14.

FIG. 14 is a flowchart illustrating a method of measuring a WR offset of a magnetic recording medium according to an exemplary embodiment of the present invention.

The method of measuring the WR offset comprises writing a WR offset measurement pattern, and detecting a WR offset using the written WR offset measurement pattern. While a related art continuous medium can form a WR offset measurement pattern on any position of a recording surface, since the magnetic recording medium of FIG. 14 is formed so that a continuous area and a pattern area are separated in a physical manufacturing process, it is necessary to first find the position of the continuous area on which a WR offset measurement pattern is to be written.

Accordingly, in operation S10, the position of the continuous area is first determined.

Information on the position of the continuous area may be contained in track information that may be embedded in data tracks when the data tracks are patterned during manufacture of the magnetic recording medium. In this case, the position of the continuous area can be determined by reading the track information. Alternatively, information on the position of the continuous area may be recorded on the magnetic recording medium after the magnetic recording medium is completely manufactured, or may be recorded on a memory within a circuit unit of an HDD. However, the present exemplary embodiment is not limited to the case where the information on the position of the continuous area is already recorded. For example, the position of the continuous area may be determined by using a difference of signal characteristics between a pattern area and the continuous area. When an arbitrary pattern is written over the entire recording surface, magnetic recording is carried out on the data tracks of the pattern area and on an arbitrary position of the continuous area. Accordingly, since the level of a pattern signal reproduced at a boundary between the pattern area and the continuous area is non-continuously changed, the position of the continuous area can be determined using the non-continuous change in the level of the pattern signal.

In operation S20, a WR offset measurement pattern is written in the continuous area based on the determined position of the continuous area. Since the WR offset measurement pattern is written in the continuous area in FIG. 14, the written WR offset measurement pattern can be any of various patterns used by the related art continuous medium.

While the WR offset measurement pattern is written in the continuous area in FIG. 14, the present exemplary embodiment is not limited thereto and a part of the WR offset measurement pattern may be written in the pattern area. For instance, the WR offset measurement pattern may be written across the pattern area and the continuous area. In operation S30, a WR offset is measured using the written WR offset measurement pattern. In operation S40, the position of the magnetic head is compensated for using the measured WR offset. Since the written WR offset measurement pattern is the same as a pattern used in the related art continuous medium, the method of measuring the WR offset and compensating for the position of the magnetic head may be the same as a method used for an HDD using a related art continuous medium. Since the method of measuring the WR offset in the continuous medium and compensating for the position of the magnetic head is well known to one of ordinary skill in the art, a detailed explanation thereof will not be given.

As described above, since the magnetic recording medium, the HDD employing the same, and the method of measuring the WR offset of the HDD according to the exemplary embodiment of the present invention involve forming a continuous area on a magnetic recording medium, such as a discrete track medium or a patterned medium having a magnetic recording area which is pre-determined, a method of measuring a WR offset used for a related art continuous medium can be used without being vastly modified. Accordingly, the HDD according to the exemplary embodiment of the present invention can correct a WR offset of a magnetic head without requiring large modifications to be made to a circuit unit of an HDD employing a related art continuous medium.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A magnetic recording medium comprising:
a disk substrate (19; 29; 39; 49); and
a magnetic recording layer (15; 25; 35; 45) formed on at least one surface of the disk substrate (19; 29; 39; 49),
wherein the magnetic recording layer (15; 25; 35; 45) comprises at least one pattern area (12; 22; 32; 42) patterned into a plurality of data tracks, wherein the at least one pattern area (12; 22; 32; 42) is formed of a patterned magnetic substance,
and wherein the magnetic recording medium is **characterized in that** the magnetic recording layer (15; 25; 35; 45) further comprises at least one continuous area (13; 23; 33; 43) formed of a continuous magnetic substance for use in determining a write read, hereinafter referred to as WR, offset.

2. The magnetic recording medium of claim 1, wherein at least a part of a WR offset measurement pattern for detecting the WR offset is written in the at least one continuous area (13; 23; 33; 43).

3. The magnetic recording medium of claim 1 or 2, wherein the at least one continuous area (13; 33) is formed in at least one of sectors each having a fan shape.

4. The magnetic recording medium of claim 1 or 2, wherein the at least one continuous area (23; 43) is at least one annular band-shaped area concentric with the plurality of data tracks.

5. The magnetic recording medium of claim 4, wherein the at least one continuous area (23; 43) has a width corresponding to at least 2 track pitches.

6. The magnetic recording medium of any preceding claim, wherein information on a position of the at least one continuous area (13; 23; 33; 43) is recorded in the at least one pattern area (12; 22; 32; 42).

7. The magnetic recording medium of any preceding claim, wherein the plurality of data tracks (12a; 22a) are magnetically isolated from each other in a crosstrack direction, and are formed of a continuous magnetic substance in a downtrack direction.

8. The magnetic recording medium of any of claims 1 to 6, wherein the plurality of data tracks (32a; 42a) are formed of a plurality of non-continuous magnetic substances which are magnetically isolated in a crosstrack direction and a downtrack direction.

9. The magnetic recording medium of claim 8, wherein one bit is assigned to each of the plurality of non-continuous magnetic substances.

10. The magnetic recording medium of claim 7 or 8, wherein separation areas (12b; 22b; 32b; 42b) magnetically isolate the plurality of data tracks (12a; 22a; 32a; 42a) from each other, and are empty and/or filled with a non-magnetic material.

11. A hard disk drive comprising:
the magnetic recording medium of any preceding claim;
a magnetic head (50) comprising a write head (51) which writes data on the magnetic recording medium, and a read head (54) which reads data recorded on the magnetic recording medium; and
a control unit (123) which controls a position of the magnetic head (50) over the magnetic recording medium,
wherein the control unit (123) is arranged to detect a WR offset of the magnetic head (50) using the at least one continuous area of the magnetic recording medium.

12. A method of measuring a write read, hereinafter referred to as WR, offset in a hard disk drive of a magnetic head of a magnetic recording medium (10; 20; 30; 40), the magnetic recording medium (10; 20; 30; 40) comprising at least one continuous area (13;23; 33; 43) formed of a continuous magnetic substance and at least one pattern area (12; 22; 32; 42) patterned into a plurality of data tracks, wherein the at least one pattern area (12; 22; 32; 42) is formed of a patterned magnetic substance, the method comprising:
writing at least one part of a WR offset measurement pattern in the at least one continuous area (13; 23; 33; 43) of the magnetic recording medium (10; 20; 30; 40); and
measuring a WR offset from the WR offset measurement pattern.

13. The method of claim 12, wherein information on a position of the at least one continuous area (13; 23; 33; 43) is previously recorded on the magnetic recording medium (10; 20; 30; 40),
wherein the writing of the at least one part of the WR offset measurement pattern comprises writing the WR offset measurement pattern in the at least one continuous area (13; 23; 33; 43) by referring to the information on the position of the at least one continuous area (13; 23; 33; 43).

14. The method of claim 12, wherein the writing of the at least one part of the WR offset measurement pattern comprises:
determining a position of the at least one continuous area (13; 23; 33; 43) using a difference of signal characteristics between the at least one pattern area (12; 22; 32; 42) and the at least one continuous area (13; 23; 33; 43); and
writing a WR offset measurement pattern in the continuous area (13; 23; 33; 43) by referring to a result of determining the position of the at least one continuous area (13; 23; 33; 43).

15. The method of any of claims 12 to 14, further comprising correcting a position of the magnetic head using a result of the measured WR offset.

## Patentansprüche

1. Magnetisches Aufzeichnungsmedium, umfassend:
ein Plattensubstrat (19, 29, 39, 49) und
eine magnetische Aufzeichnungsschicht (15, 25, 35, 45), die auf mindestens einer Oberfläche des Plattensubstrats (19, 29, 39, 49) ausgebildet ist,
wobei die magnetische Aufzeichnungsschicht (15, 25, 35, 45) mindestens einen Strukturbereich (12, 22, 32, 42) umfasst, der in eine Mehrzahl von Datenspuren strukturiert ist, wobei der mindestens eine Strukturbereich (12, 22, 32, 42) aus einer strukturierten magnetischen Substanz gebildet ist,
und wobei das magnetische Aufzeichnungsmedium **dadurch gekennzeichnet ist, dass** die magnetische Aufzeichnungsschicht (15, 25, 35, 45) weiter mindestens einen kontinuierlichen Bereich (13, 23, 33, 43), der aus einer kontinuierlichen magnetischen Substanz gebildet ist, zur Verwendung beim Bestimmen eines Schreib-Lese-Offset, nachfolgend als WR-Offset bezeichnet, umfasst.

2. Magnetisches Aufzeichnungsmedium nach Anspruch 1 wobei mindestens ein Teil einer WR-Offset-Messstruktur zum Detektieren des WR-Offsets in den mindestens einen kontinuierlichen Bereich (13, 23, 33, 43) geschrieben ist.

3. Magnetisches Aufzeichnungsmedium nach Anspruch 1 oder 2,
wobei der mindestens eine kontinuierliche Bereich (13, 33) in mindestens einem Sektor mit einer Fächerform ausgebildet ist.

4. Magnetisches Aufzeichnungsmedium nach Anspruch 1 oder 2,
wobei der mindestens eine kontinuierliche Bereich (23, 43) mindestens ein bandförmiger Ringbereich ist, der zu der Mehrzahl von konzentrischen Datenspuren konzentrisch ist.

5. Magnetisches Aufzeichnungsmedium nach Anspruch 4, wobei der mindestens eine kontinuierliche Bereich (23, 43) eine Breite aufweist, die mindestens 2 Spurabständen entspricht.

6. Magnetisches Aufzeichnungsmedium nach einem der vorhergehenden Ansprüche, wobei Informationen zu einer Position des mindestens einen kontinuierlichen Bereichs (13, 23, 33, 43) in dem mindestens einen Strukturbereich (12, 22, 32, 42) aufgezeichnet sind.

7. Magnetisches Aufzeichnungsmedium nach einem der vorhergehenden Ansprüche, wobei die Mehrzahl von Datenspuren (12a, 22a) in einer Richtung quer zur Spur magnetisch voneinander isoliert sind, und in einer Richtung entlang der Spur aus einer kontinuierlichen magnetischen Substanz gebildet sind.

8. Magnetisches Aufzeichnungsmedium nach einem der Ansprüche 1 bis 6, wobei die Mehrzahl von Datenspuren (32a, 42a) aus einer Mehrzahl von nicht kontinuierlichen magnetischen Substanzen gebildet sind, die in einer Richtung quer zur Spur und in einer Richtung entlang der Spur magnetisch isoliert sind.

9. Magnetisches Aufzeichnungsmedium nach Anspruch 8, wobei jeder der Mehrzahl von nicht kontinuierlichen magnetischen Substanzen ein Bit zugeordnet ist.

10. Magnetisches Aufzeichnungsmedium nach Anspruch 7 oder 8,
wobei Trennungsbereiche (12b, 22b, 32b, 42b) die Mehrzahl von Datenspuren (12a, 22a, 32a, 42a) magnetisch voneinander isolieren und mit einem nicht magnetischen Material gefüllt und/oder leer sind.

11. Festplattenlaufwerk, umfassend:
das magnetische Aufzeichnungsmedium nach einem der vorhergehenden Ansprüche,
einen Magnetkopf (50) umfassend einen Schreibkopf (51) der Daten auf das magnetische Aufzeichnungsmedium schreibt, und einen Lesekopf (54), der auf dem magnetischen Aufzeichnungsmedium aufgezeichnete Daten liest, und
eine Steuereinheit (123), die eine Position des Magnetkopfs (50) über dem magnetischen Aufzeichnungsmedium steuert,
wobei die Steuereinheit (123) dazu ausgebildet ist, einen WR-Offset des Magnetkopfs (50) unter Verwendung des mindestens einen kontinuierlichen Bereichs des magnetischen Aufzeichnungsmediums zu detektieren.

12. Verfahren zum Messen eines Schreib-Lese-Offset, nachfolgend als WR-Offset bezeichnet, in einem Festplattenlaufwerk eines Magnetkopfs eines magnetischen Aufzeichnungsmediums (10, 20, 30, 40), wobei das magnetische Aufzeichnungsmedium (10, 20, 30, 40) mindestens einen kontinuierlichen Bereich (13, 23, 33, 43), der aus einer kontinuierlichen magnetischen Substanz gebildet ist, und mindestens einen Strukturbereich (12, 22, 32, 42) umfasst, der in eine Mehrzahl von Datenspuren strukturiert ist, wobei der mindestens eine Strukturbereich (12, 22, 32, 42) aus einer strukturierten magnetischen Substanz gebildet ist, wobei das Verfahren umfasst:
Schreiben mindestens eines Teils einer WR-Offset-Messstruktur in den mindestens einen kontinuierlichen Bereich (13, 23, 33, 43) des magnetischen Aufzeichnungsmediums (10, 20, 30, 40) und
Messen eines WR-Offsets von der WR-Offset-Messstruktur.

13. Verfahren nach Anspruch 12, wobei Informationen zu einer Position des mindestens einen kontinuierlichen Bereichs (13, 23, 33, 43) zuvor auf dem magnetischen Aufzeichnungsmedium (10, 20, 30, 40) aufgezeichnet worden sind,
wobei das Schreiben des mindestens einen Teils der WR-Offset-Messstruktur Schreiben der WR-Offset-Messstruktur in den mindestens einen kontinuierlichen Bereich (13, 23, 33, 43) durch Bezugnahme zu den Informationen zur Position des mindestens einen kontinuierlichen Bereichs (13, 23, 33, 43) umfasst.

14. Verfahren nach Anspruch 12, wobei das Schreiben des mindestens einen Teils der WR-Offset-Messstruktur umfasst:
Bestimmen einer Position des mindestens einen kontinuierlichen Bereichs (13, 23, 33, 43) unter Verwendung einer Differenz in Signalcharakteristiken zwischen dem mindestens einen Strukturbereich (12, 22, 32, 42) und dem mindestens einen kontinuierlichen Bereich (13, 23, 33, 43) und
Schreiben einer WR-Offset-Messstruktur in den kontinuierlichen Bereich (13, 23, 33, 43) durch Bezugnahme zu einem Ergebnis der Bestimmung der Position des mindestens einen kontinuierlichen Bereichs (13, 23, 33, 43).

15. Verfahren nach einem der Ansprüche 12 bis 14, weiter umfassend Korrigieren einer Position des Magnetkopfes unter Verwendung eines Ergebnisses des gemessenen WR-Offsets.

## Revendications

1. Support d'enregistrement magnétique comprenant :
un substrat de disque (19 ; 29 ; 39 ; 49) ; et
une couche d'enregistrement magnétique (15 ; 25 ; 35 ; 45) formée sur au moins une surface du substrat de disque (19 ; 29 ; 39 ; 49),
dans lequel la couche d'enregistrement magnétique (15 ; 25 ; 35 ; 45) comprend au moins une zone de motif (12 ; 22 ; 32 ; 42) structurée en une pluralité de pistes de données, dans lequel ladite au moins une zone de motif (12 ; 22 ; 32 ; 42) est constituée d'une substance magnétique structurée,
et dans lequel le support d'enregistrement magnétique est **caractérisé en ce que** la couche d'enregistrement magnétique (15 ; 25 ; 35 ; 45) comprend en outre au moins une zone continue (13 ; 23 ; 33 ; 43) constituée d'une substance magnétique continue destinée à être utilisée pour déterminer un décalage écriture-lecture, appelé ci-après WR.

2. Support d'enregistrement magnétique selon la revendication 1,
dans lequel au moins une partie d'un motif de mesure de décalage WR pour détecter le décalage WR est écrit dans ladite au moins une zone continue (13 ; 23 ; 33 ; 43).

3. Support d'enregistrement magnétique selon la revendication 1 ou 2, dans lequel ladite au moins une zone continue (13 ; 33) est formée dans au moins l'un de secteurs ayant chacun une forme en éventail.

4. Support d'enregistrement magnétique selon la revendication 1 ou 2, dans lequel ladite au moins une zone continue (23 ; 43) est au moins une zone annulaire en forme de bande concentrique avec la pluralité de pistes de données.

5. Support d'enregistrement magnétique selon la revendication 4,
dans lequel ladite au moins une zone continue (23 ; 43) a une largeur correspondant à au moins 2 pas de pistes.

6. Support d'enregistrement magnétique selon l'une quelconque des revendications précédentes, dans lequel des informations concernant une position de ladite au moins une zone continue (13 ; 23 ; 33 ; 43) sont enregistrées dans ladite au moins une zone de motif (12 ; 22 ; 32 ; 42).

7. Support d'enregistrement magnétique selon l'une quelconque des revendications précédentes, dans lequel la pluralité de pistes de données (12a ; 22a) sont isolées magnétiquement les unes des autres dans une direction transversale aux pistes, et sont constituées d'une substance magnétique continue dans une direction le long des pistes.

8. Support d'enregistrement magnétique selon l'une quelconque des revendications 1 à 6, dans lequel la pluralité de pistes de données (32a ; 42a) sont constituées d'une pluralité de substances magnétiques discontinues qui sont isolées magnétiquement dans une direction transversale aux pistes et dans une direction le long des pistes.

9. Support d'enregistrement magnétique selon la revendication 8,
dans lequel un bit est attribué à chacune de la pluralité de substances magnétiques discontinues.

10. Support d'enregistrement magnétique selon la revendication 7 ou 8, dans lequel des zones de séparation (12b ; 22b ; 32b ; 42b) isolent magnétiquement la pluralité de pistes de données (12a ; 22a ; 32a ; 42a) les unes des autres et sont vides et/ou remplies d'un matériau non magnétique.

11. Lecteur de disque dur comprenant :
le support d'enregistrement magnétique selon l'une quelconque des revendications précédentes ;
une tête magnétique (50) comprenant une tête d'écriture (51) qui écrit des données sur le support d'enregistrement magnétique, et une tête de lecture (54) qui lit des données enregistrées sur le support d'enregistrement magnétique ; et
une unité de commande (123) qui commande une position de la tête magnétique (50) au-dessus du support d'enregistrement magnétique,
dans lequel l'unité de commande (123) est agencée pour détecter un décalage WR de la tête magnétique (50) en utilisant ladite au moins une zone continue du support d'enregistrement magnétique.

12. Procédé de mesure d'un décalage écriture-lecture, appelé ci-après WR, dans un lecteur de disque dur, d'une tête magnétique d'un support d'enregistrement magnétique (10 ; 20 ; 30 ; 40), le support d'enregistrement magnétique (10 ; 20 ; 30 ; 40) comprenant au moins une zone continue (13 ; 23 ; 33 ; 43) constituée d'une substance magnétique continue et au moins une zone de motif (12 ; 22 ; 32 ; 42) structurée en une pluralité de pistes de données, dans lequel ladite au moins une zone de motif (12 ; 22 ; 32 ; 42) est constituée d'une substance magnétique structurée, le procédé consistant tel :
écrire au moins une partie d'un motif de mesure de décalage WR dans ladite au moins une zone continue (13 ; 23 ; 33 ; 43) du support d'enregistrement magnétique (10 ; 20 ; 30 ; 40) ; et
mesurer un décalage WR à partir du motif de mesure de décalage WR.

13. Procédé selon la revendication 12, dans lequel des informations concernant une position de ladite au moins une zone continue (13 ; 23 ; 33 ; 43) sont enregistrées au préalable sur le support d'enregistrement magnétique (10 ; 20 ; 30 ; 40),
dans lequel l'écriture de ladite au moins une partie du motif de mesure de décalage WR comprend l'écriture du motif de mesure de décalage WR dans ladite au moins une zone continue (13 ; 23 ; 33 ; 43) en se référant aux informations concernant la position de ladite au moins une zone continue (13 ; 23 ; 33 ; 43).

14. Procédé selon la revendication 12, dans lequel l'écriture de ladite au moins une partie du motif de mesure de décalage WR consiste à :
déterminer une position dans ladite au moins une zone continue (13 ; 23 ; 33 ; 43) en utilisant une différence de caractéristiques de signal entre ladite au moins une zone de motif (12 ; 22 ; 32 ; 42) et ladite au moins une zone continue (13 ; 23 ; 33 ; 43) ; et
écrire un motif de mesure de décalage WR dans la zone continue (13 ; 23 ; 33 ; 43) en se référant à un résultat de détermination de la position de ladite au moins une zone continue (13 ; 23 ; 33 ; 43).

15. Procédé selon l'une quelconque des revendications 12 à 14, comprenant en outre la correction d'une position de la tête magnétique en utilisant un résultat du décalage WR mesuré.
